# EUROPÄISCHE PATENTANMELDUNG

(11) **EP 4 484 812 A1**
(43) Veröffentlichungstag der Anmeldung: **01.01.2025**
(21) Anmeldenummer: 24166378.0
(22) Anmeldetag: 26.03.2024
(51) Int. Cl.: F16K 31/04

(54) **ANTRIEBSBAUKASTEN MIT ARMATURENANTRIEBSMODULEN ZUM AUFBAUEN EINES ARMATURENANTRIEBSSYSTEMS**

(30) Priorität: 29.06.2023 DE 102023117127
(71) Anmelder: Helmut Bälz GmbH, 74076 Heilbronn (DE)
(72) Erfinder: Schellenberger, Tobias, 74912 Kirchardt-Berwangen (DE)
(74) Vertreter: Rüger Abel Patentanwälte PartGmbB

(57) **Zusammenfassung**

Der erfindungsgemäße Antriebsbaukasten aus Armaturenantriebsmodulen (12, 13, 14) dient dem Zusammensetzen und Zusammenbauen eines modularen Armaturenantriebssystems (10). Die Armaturenantriebsmodule (12, 13, 14) des erfindungsgemäßen Antriebsbaukastens sind über ihre Modulschnittstellen (28, 35, 36, 38) miteinander zu einem Armaturenantriebssystem 10 variabel verbindbar. In den Modulgehäusen (11, 31) der Ventilantriebsmodule (10, 20, 30) sind die jeweiligen funktionalen Einheiten getrennt voneinander enthalten, wodurch die Montage erleichtert werden kann. Der erfindungsgemäße Antriebsbaukasten umfasst ein elektrisches Antriebsmodul (13) mit einem Antriebsmodulgehäuse (20), an dessen Unterseite (27) eine Modulschnittstelle (28) angeordnet ist; sowie ein an einer Armatur anbringbares Stellmodul, das dazu eingerichtet ist, eine eingangsseitige Drehbewegung in eine ausgangsseitige Bewegung umzusetzen, mit der die Armatur betätigbar ist, wobei die Armaturenantriebsmodule (12, 13, 14) über ihre Modulschnittstellen (28, 35, 36, 38) miteinander zu einem Armaturenantriebsystem verbindbar sind.

## Beschreibung

Die Erfindung betrifft im Allgemeinen Armaturenantriebssysteme mit Modulen, die zu einem Armaturenantrieb zusammensetz- und montierbar sowie Antriebsbaukästen für einen Armaturenantrieb.

Elektrische Antriebe für Armaturen sind allgemein bekannt. Armaturen bezeichnen im Anlagenbau Bauteile zur Veränderung und Steuerung von Stoffströmen, das insbesondere an Rohrleitungen und Behältern (wie beispielsweise Kesseln) für Gase und Flüssigkeiten verwendet werden. Armaturen können beispielsweise als Ventile, Klappen, Kugelhähne oder Schieber ausgestaltet sein. Mit Armaturenantrieben können die Armaturen derart betätigt werden, dass der Durchfluss durch die Armatur einstellbar ist. Insbesondere bei sicherheitskritischen Anwendungen werden Schließvorrichtungen bzw. Ausfallsicherungen eingesetzt, um die Armaturen im Notfall, beispielsweise bei Stromausfall oder Ausfall des Antriebes, in eine sichere Stellung zu bringen.

In der US 10 197 141 B2 wird ein elektrischer Stellantrieb für Ventile beschrieben, der mit einer Ausfallsicherung für den Fall eines Stromausfalls ausgestattet ist. Die Ausfallsicherung in dem Stellantrieb kann beispielsweise dann aktiviert werden, wenn ein Stromausfall oder eine andere externe Fehlbedienung des Stellantriebs die Aktivierung veranlasst oder so dass das Ventil ohne externe Stromversorgung in eine vorbestimmte Position bewegt wird. Um das Ventil in eine vorbestimmte Position zu bringen, wird herkömmlicherweise eine Feder verwendet.

Die EP 2 992 257 B1 beschreibt eine Ventilschließvorrichtung mit einer Abtriebswelle für den Normalbetrieb und einem Notantrieb, wobei die Abtriebswelle zusätzlich durch den Notantrieb aus einer Betriebsstellung in eine Endstellung überführbar ist. Der Notantrieb ist als ein Rollfedermotor ausgebildet und ist über ein Überlagerungsgetriebe mit der Abtriebswelle gekoppelt.

Die im Stand der Technik beschriebenen Armaturenantriebe mit Schließvorrichtungen bzw. Ausfallsicherungen sind jedoch als Komplettsysteme konstruiert, bei denen alle Systemkomponenten, wie z.B. Getriebe, Antrieb und Feder, fest in einer Einheit umfasst sind. Ein nachträgliches Verändern, Anpassen, Warten oder Austauschen einzelner Komponenten dieses Komplettsystems ist daher aufwändig.

Davon ausgehend ist es die Aufgabe der Erfindung, einen Antriebsbaukasten für Armaturen bereitzustellen, mit dem eine variable Zusammenstellung und Montage eines Armaturenantriebs ermöglicht wird.

Diese Aufgabe wird mit dem Antriebsbaukasten aus Armaturenantriebsmodulen zum Zusammensetzen und Aufbauen eines Armaturenantriebsystems nach Anspruch 1 gelöst:

Der erfindungsgemäße Antriebsbaukasten umfasst ein elektrisches Antriebsmodul mit einem Antriebsmodulgehäuse, an dessen Unterseite eine Modulschnittstelle angeordnet ist, sowie ein an einer Armatur anbringbares Stellmodul mit einem Stellmodulgehäuse, an dessen Oberseite eine Modulschnittstelle angeordnet ist, wobei das Stellmodul dazu eingerichtet ist, eine eingangsseitige Drehbewegung in eine ausgangsseitige Bewegung umzusetzen, mit der die Armatur betätigbar ist. Unter einem Betätigen der Armatur ist vorzugsweise ein Einstellen des Durchflusses durch die Armatur zu verstehen. Das Betätigen der Armatur kann ein Öffnen und Schließen der Armatur umfassen, wobei bei sämtlichen Zwischenstellungen zwischen einer (vollständig) geöffneten und (vollständig) geschlossenen enthalten sein können.

Die Armaturenantriebsmodule des erfindungsgemäßen Antriebsbaukastens sind über ihre Modulschnittstellen (frei) miteinander zu einem Armaturenantriebssystem verbindbar, wodurch es möglich ist, ein Armaturenantriebssystem aus den Armaturenantriebsmodulen des Antriebsbaukastens so zusammenzustellen und zu montieren, dass das zusammengebaute Armaturenantriebssystem an die Anforderungen, die durch die bereits verbaute Armatur an das Armaturenantriebssystem gestellt werden, angepasst werden kann. In den Modulgehäusen der Armaturenantriebsmodule sind die jeweiligen funktionalen Einheiten getrennt voneinander eingeschlossen. Die Abmessungen der Modulgehäuse und der an den Ober- und Unterseiten angebrachten Modulschnittstellen können vorzugsweise zumindest im Wesentlichen gleich ausgestaltet sein, wodurch die Montage erleichtert werden kann. Insbesondere sind die funktionalen Einheiten in den Armaturenantriebsmodulen von den Gehäusen zumindest teilweise, vorzugsweise vollständig, eingeschlossen, wodurch eine sichere Handhabung beim Zusammenbau und Betrieb des Armaturenantriebssystem gewährleistet werden kann.

Insbesondere weist der Antriebsbaukasten mindestens ein Federmodul mit einem Federmodulgehäuse auf, an dessen Oberseite und Unterseite Modulschnittstellen angeordnet sind. Vorzugsweise umfasst der Antriebsbaukasten mehrere Federmodule, die einheitliche Federelemente aufweisen, wobei die einzelnen Federmodule miteinander kombiniert werden können. Die Federmodulgehäuse der einzelnen Federmodule sind vorzugsweise identisch aufgebaut und derart stapelbar, dass sich die Federdrehmomente der Federmodule aufaddieren. Die Federelemente können beim Aufbau vorgespannt werden, wobei der Wert des abgegebenen Federdrehmoments von der Vorspannung abhängt. Die Federdrehmomente der Federmodule liegen in einem Wertebereich, der von einem maximalen Federdrehmoment begrenzt ist. Die Federdrehmomente der Federmodule sind vorzugsweise umdrehbar, so dass die Wirkrichtung der Federdrehmomente (beispielsweise linksdrehend) nach dem Umdrehen in die entgegengesetzte Wirkrichtung (beispielsweise rechtsdrehend) weisen kann. Gemäß dem erfindungsgemäßen modularen Konzept, das durch den Antriebsbaukasten realisiert ist, kann der Antriebsbaukasten jedoch auch, wie zuvor beschrieben, ohne ein Federmodul ausgestaltet sein.

Eine Besonderheit des erfindungsgemäßen Antriebsbaukastens liegt darin, dass die jeweiligen Armaturenantriebsmodule separate, miteinander verbindbare und funktionell koppelbare Gehäuse aufweisen, so dass ein Zusammenstellen, Verändern, Austauschen und Zusammenbauen der einzelnen Armaturenantriebsmodule möglichst einfach und vor Ort (also am Montageort) oder beispielsweise auch beim Nachrüsten einer Anlage oder der Wartung eines bestehenden Armaturenantriebssystems möglich ist. Insbesondere weisen die Armaturenantriebsmodule außerdem Wellenkupplungen auf, mittels derer die Armaturenantriebsmodule funktional miteinander zu einem Armaturenantriebssystem koppelbar sind.

Die Modulschnittstellen sind dazu eingerichtet, die Modulgehäuse der einzelnen Armaturenantriebsmodule miteinander zu verbinden. Vorzugsweise sind die Modulschnittstellen an den Ober- und Unterseiten der Modulgehäuse angeordnet, so dass die Modulgehäuse der Armaturenantriebsmodule aufeinander gestapelt werden können, wobei die Modulschnittstellen eine verdeckte Verschraubung ermöglichen. Beispielsweise weisen die Modulschnittstellen eine oder mehrere Durchgangsbohrungen und eine oder mehrere Gewindebohrungen auf, so dass die Modulgehäuse mit zu den Gewindebohrungen passenden Gewindeschrauben aneinander angeschlossen werden können, ohne die Modulgehäuse beim Aufbau demontieren zu müssen. Die Gewindeschrauben sind außerdem von außen nicht sichtbar (verdeckt). Der Schaft der Gewindeschrauben kann durch die Durchgangsbohrungen eines Armaturenantriebsmoduls gesteckt werden und mit der Gewindebohrung eines anderen, darunter oder darüber liegenden Antriebsmoduls in Eingriff gebracht werden, so dass die Gewindeschraube das eine Armaturenantriebsmodul gegen das andere Armaturenantriebsmodul spannt. Hierfür wird das untere Armaturenantriebsmodul gegenüber dem oberen Armaturenantriebsmodul um einen bestimmten Winkel, beispielsweise um 90°, gedreht. Der Kopf der Gewindeschraube ist vorzugsweise derart versenkbar, dass dieser eben mit der Unterseite des Gehäuses abschließt, wodurch der Kopf der Gewindeschraube nicht an der Unterseite vorsteht.

Vorzugsweise weisen die Armaturenantriebsmodule jeweils Wellenkupplungen auf, mit denen die Wellen der einzelnen Armaturenantriebsmodule miteinander koppelbar sind, wodurch die Armaturenantriebsmodule funktional miteinander gekoppelt werden können.

Insbesondere sind die Modulschnittstellen des Federmoduls wahlweise mit den Modulschnittstellen anderer Federmodule oder den Modulschnittstellen der weiteren Armaturenantriebsmodule verbindbar. Hierdurch kann der Gesamtaufbau des montierten Armaturenantriebssystem (frei) zusammengestellt werden.

Vorzugsweise weist der Armaturenantriebsbaukasten eine Vielzahl von Federmodulen auf, in deren Federmodulgehäusen ein darin untergebrachtes Federelement eingeschlossen ist, wodurch ein Verletzungsrisiko beim Zusammenbau des Armaturenantriebs verringert werden kann. Das Federelement ist beispielsweise als Rollfeder ausgebildet.

Es ist bevorzugt, dass das mindestens eine Federmodul eine Verbindungswelle aufweist, wobei das Federelement dazu eingerichtet ist, ein Federdrehmoment auf die Verbindungswelle wirken zu lassen, wenn dieses entgegen einer Federrichtung vorgespannt ist. Das Federdrehmoment kann in einer Notsituation, wie beispielsweise bei Stromausfall oder Ausfall des Antriebsmoduls, dafür sorgen, dass die Armatur aufgrund des Federdrehmoments in eine Sicherheitsstellung (z.B. geschlossen oder geöffnet) gebracht wird.

Insbesondere weist der Antriebsbaukasten mit einheitlichen festgelegten (maximalen) Federdrehmomenten auf, die derart stapelbar sind, dass die Federdrehmomente zueinander parallel auf die Eingangswelle des Stellmoduls wirken. Durch das Stapeln von mehreren Federmodulen kann so die Federcharakteristik des Antriebssystems verändert werden. Für den Fall, dass es die verbaute Armatur erfordert, dass beispielsweise ein größeres Schließmoment auf das Stellglied einwirkt, um dieses in die Sicherheitsstellung zu bringen, können mehrere Federmodule gestapelt werden.

Vorzugsweise sind die an den Unterseiten der Federmodule angeordneten Modulschnittstellen mit den an den Unterseiten angeordneten Modulschnittstellen der übrigen Armaturenantriebsmodule des Antriebsbaukastens und entsprechend die an den Oberseiten der Federmodule angeordneten Modulschnittstellen mit den an den Oberseiten angeordneten Modulschnittstellen der übrigen Armaturenantriebsmodule des Antriebsbaukastens derart verbindbar, dass die Federmodule auf dem Kopf stehend (also umgedreht) eingebaut sind. Dies ermöglicht ein Umdrehen der Federmodule, wodurch die Richtung, in die die Federdrehmomente auf die Eingangswelle des Stellmoduls wirken, umgekehrt werden kann. Die Federdrehmomente zeigen nach dem Umkehren in die entgegengesetzte Richtung. Beispielsweise können die Federdrehmomente der Federmodule im vorgespannten Zustand rechtsdrehend (im Uhrzeigersinn) wirken, wenn die Oberseiten der Federmodule oben angeordnet sind. Wenn die Oberseiten der Federmodule dagegen unten angeordnet sind, wirken die Federdrehmomente der Federmodule im vorgespannten Zustand linksdrehend (entgegen dem Uhrzeigersinn). So kann je nachdem, ob die Sicherungsstellung der Armatur die geschlossene oder die geöffnete Position ist, das Armaturenantriebssystem an die vorhandene Armatur angepasst werden.

Vorzugsweise weisen die Modulschnittstellen der Armaturenantriebsmodule Durchgangsbohrungen auf, die sich von der Oberseite bis zur Unterseite der Modulgehäuse erstrecken. Insbesondere weisen die Modulschnittstellen der Armaturenantriebsmodule Gewindebohrungen auf, die an der Ober- und Unterseite der Armaturengehäuse angeordnet sind.

Insbesondere umfasst der Antriebsbaukasten ferner ein Drehgetriebemodul mit einem Drehgetriebemodulgehäuse, an dessen Oberseite und Unterseite Modulschnittstellen angeordnet sind, wobei das Drehgetriebemodul dazu eingerichtet ist, eine eingangsseitige Drehbewegung in eine ausgangsseitige Drehbewegung umzusetzen, wobei vorzugsweise die ausgangsseitige Drehbewegung zu der eingangsseitigen Drehbewegung unter- oder übersetzt ist. Beispielsweise kann so eine Drehbewegung eines Antriebsmoduls untersetzt werden, um das übertragene Drehmoment der Drehbewegung zu erhöhen. Dies ist insbesondere bei anderen Armaturenarten, wie beispielsweise Drehventilen, Absperrklappen und dergleichen ohne Lineargetriebemodul, vorteilhaft, bei denen ein vergleichsweise hohes Drehmoment zum Stellen des Stellglieds benötigt wird.

Die Stellmodule des Antriebsbaukastens können ein Lineargetriebemodul mit einem Lineargetriebemodulgehäuse aufweisen, an dessen Oberseite eine Modulschnittstelle angeordnet ist, wobei das Lineargetriebemodul dazu eingerichtet ist, eine eingangsseitige Drehbewegung in eine ausgangsseitige Linearbewegung umzusetzen, mit der die Armatur betätigt wird. Außerdem können die Stellmodule des Antriebsbaukastens ein Schwenkmodul mit einem Schwenkmodulgehäuse aufweisen, an dessen Oberseite eine Modulschnittstelle angeordnet ist, wobei das Schwenkmodulmodul dazu eingerichtet ist, eine eingangsseitige Drehbewegung in eine ausgangsseitige Schwenkbewegung zum Betätigen der Armatur umzusetzen. Hierdurch können mit dem Antriebsbaukasten Armaturenantriebssysteme zusammengestellt und aufgebaut werden, die an unterschiedliche Typen von Armaturen (wie z.B. Ventile, Klappen, Kugelhähne, Schieber und dergleichen) montierbar sind.

Es wird bevorzugt, dass die Abmessungen und Anordnungen der an den Ober- und Unterseiten der Gehäuse der Armaturenantriebsmodule vorgesehenen Modulschnittstellen derart aneinander angepasst sind, dass diese wahlweise miteinander verbindbar sind.

Ferner wird die Aufgabe durch das Armaturenantriebssystem nach Anspruch 15 gelöst:

Das erfindungsgemäße Armaturenantriebssystem ist aus mehreren Armaturenantriebsmodulen des Antriebsbaukastens der obigen Art zusammengebaut.

Sämtliche Merkmale und Vorteile, die in Bezug auf den erfindungsgemäßen Antriebsbaukasten beschrieben wurden, insbesondere in Bezug auf die einzelnen Armaturenantriebsmodule, sind ebenso auf das erfindungsgemäße Armaturenantriebssystem anwendbar.

Weitere Einzelheiten vorteilhafter Weiterbildungen oder Details der Erfindung ergeben sich aus den Zeichnungen, der Beschreibung sowie aus den Unteransprüchen. Es zeigen:
Figur 1 eine schematische Ansicht eines Beispiels eines Armaturenantriebssystems, welches aus Armaturenantriebsmodulen des Antriebsbaukastens aufgebaut ist,
Figur 2 eine schematische Ansicht eines weiteren Beispiels eines Armaturenantriebssystems, welches aus Armaturenantriebsmodulen des Antriebsbaukastens aufgebaut ist,
Figuren 3A-3C eine schematische Ansicht von weiteren Beispielen eines Armaturenantriebssystems mit unterschiedlichen Anzahlen an Federmodulen,
Figur 4 eine schematische Ansicht zum Aufbau des Armaturenantriebssystems, sowie
Figur 5 eine Detailansicht des Drehgetriebemoduls des erfindungsgemäßen Antriebsbaukastens.

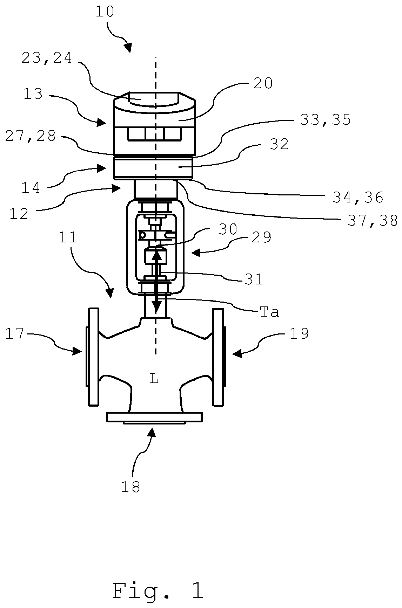

In den Figuren 1, 2 und 3A bis 3C sind mehrere Armaturenantriebssysteme 10, 10', 10" für unterschiedliche Armaturen 11, 11', 11" veranschaulicht, wobei die Armaturenantriebssysteme 10, 10', 10" aus mehreren Armaturenantriebsmodulen 12, 13, 14, 15, 16 des Antriebsbaukastens aufgebaut sind.

In Figur 1 ist die Armatur 11 als ein 3-Wege-Ventil mit einem A-Einlass 17, einem B-Einlass 18 und einem AB-Auslass 19 ausgestaltet.

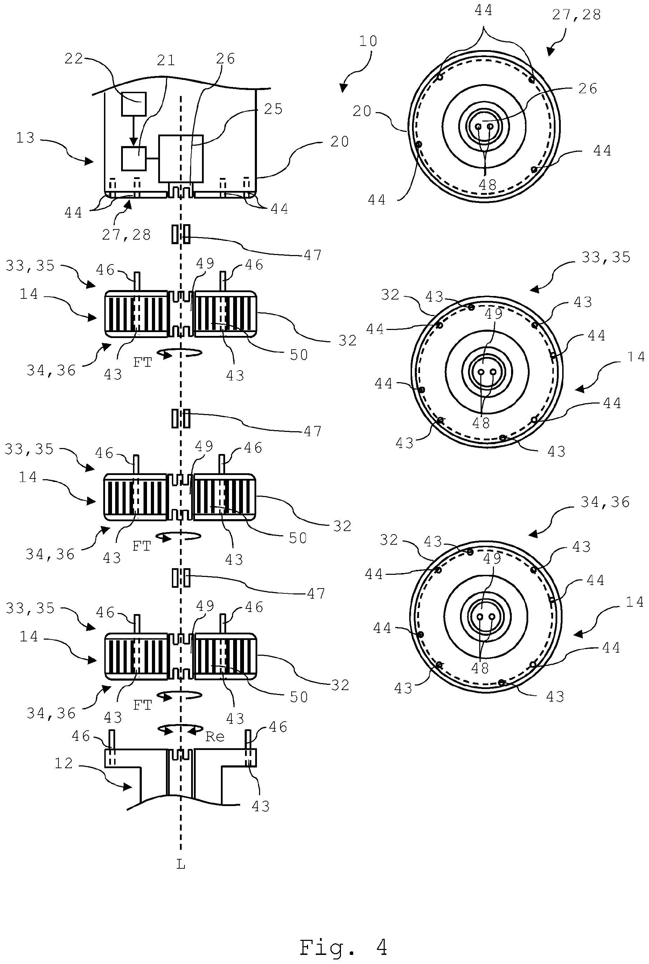

Das in Figur 1 gezeigte Armaturenantriebssystem 10 weist ein Antriebsmodul 13 mit einem Antriebsmodulgehäuse 20, einem (modulinternen) Antriebsmotor 21, einer (modulinternen) Steuerung 22, einem an der Oberseite 23 des Antriebsmoduls 13 angeordneten Bedieneinheit 24, einem (modulinternen) Drehgetriebe 25 und einer Wellenkupplung 26 des Antriebsmoduls 13 auf, wobei das Antriebsmodul 13 dazu eingerichtet ist, an seiner Wellenkupplung 26 eine Ausgangsdrehbewegung Ra um die Längsachse L von dem Antriebsmodul 13 abzugeben. An einer Unterseite 27 des Antriebsmodulgehäuses 20 ist eine Modulschnittstelle 28 des Antriebsmoduls 13 angeordnet, mit Hilfe derer das Antriebsmodulgehäuse 20 an die anderen Armaturenantriebsmodule des Antriebsbaukastens angeschlossen werden kann. Die modulinternen Komponenten des Antriebsmoduls 13 werden in Figur 4 detailliert veranschaulicht.

An einer Oberseite des Ventils 11 ist ein Ständermodul 29 für das Armaturenantriebssystem 10 angeordnet, mit dem ein Lineargetriebemodul 12 derart an dem Ventil 11 befestigt ist, dass eine Kupplung 30 des Lineargetriebemoduls 12 seine (ausgangsseitige) Hubbewegung Ta auf eine Ventilspindel 31 des Ventils 11 übertragen kann.

Zwischen dem Lineargetriebemodul 12 und dem Antriebsmodul 13 ist in Figur 1 ein Federmodul 14 mit einem eigenen Federmodulgehäuse 32 montiert. An einer Oberseite 33 und an einer Unterseite 34 des Federmodulgehäuses 32 weist dieses jeweils eine Modulschnittstelle 35, 36 auf, die dazu eingerichtet sind, mit den Modulschnittstellen 28, 35, 36, 38 der anderen Armaturenantriebsmodule 11, 12, 13, 14, 15 verbunden zu werden. In dem in Figur 1 gezeigten Beispiel sind die an der Oberseite 33 des Federmodulgehäuses 32 angeordnete Modulschnittstelle 35 mit der an der Unterseite 27 des Antriebsmodulgehäuses 20 angeordneten Modulschnittstelle 28 und die an der Unterseite 34 des Federmodulgehäuses 32 angeordnete Modulschnittstelle 36 mit der Modulschnittstelle 38 des Lineargetriebemoduls 12 verbunden. Die an der Unterseite 34 des Federmodulgehäuses 32 angeordnete Modulschnittstelle 36 ist mit der an der Oberseite 37 des Lineargetriebemoduls 12 angeordneten Modulschnittstelle 38 verbunden.

Der erfindungsgemäße Antriebsbaukasten kann verschiedene Lineargetriebemodule 12 umfassen, die an verschiedene Typen von Armaturen 11, 11', 11" angepasst sind.

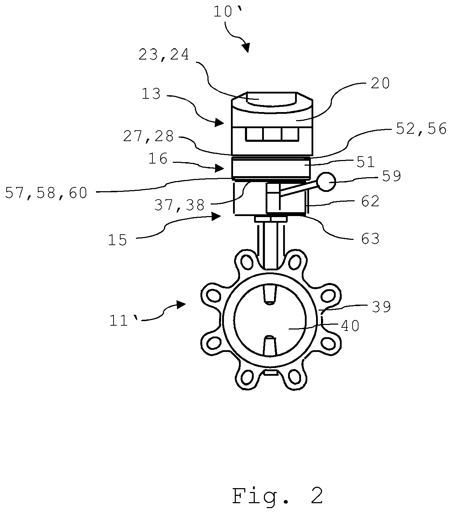

In Figur 2 ist ein weiteres Beispiel für ein Armaturenantriebssystem 10` gezeigt, welches ein Antriebsmodul 13 und ein Drehgetriebemodul 16 und ein Schwenkmodul 62 aufweist. Das gezeigte Schwenkmodul 62 weist einen Handhebel 59 auf. Alternativ kann das Schwenkmodul 16 auch keinen Handhebel 59 aufweisen. Das Schwenkmodul 16 ist dazu eingerichtet, eine eingangsseitige Drehbewegung in eine Schwenkbewegung umzusetzen. Zwischen dem Schwenkmodul 62 und dem Antriebsmodul 13 ist ein Drehgetriebemodul 16 mit einem Drehgetriebemodulgehäuse montiert, welches das eingangsseitig anliegende Drehmoment des Antriebsmoduls 12 in ein höheres Drehmoment umsetzt. An der Oberseite 60 des Schwenkmodulgehäuses 62 weist das Schwenkmodul 16 eine Modulschnittstelle 58 auf, die mit der an der Unterseite 57 angeordneten Modulschnittstelle 58 des Drehgetriebemoduls 15 verbunden ist. An der Unterseite 63 des Schwenkmodulgehäuses 62 weist es eine Schwenkmodulschnittstelle auf, die mit einer Modulschnittstelle der Armatur 11` verbunden ist. In diesem Beispiel ist die Armatur 11' als eine Klappe ausgebildet. Die Klappe weist ein Klappengehäuse 39 mit einer Klappenscheibe 40 auf.

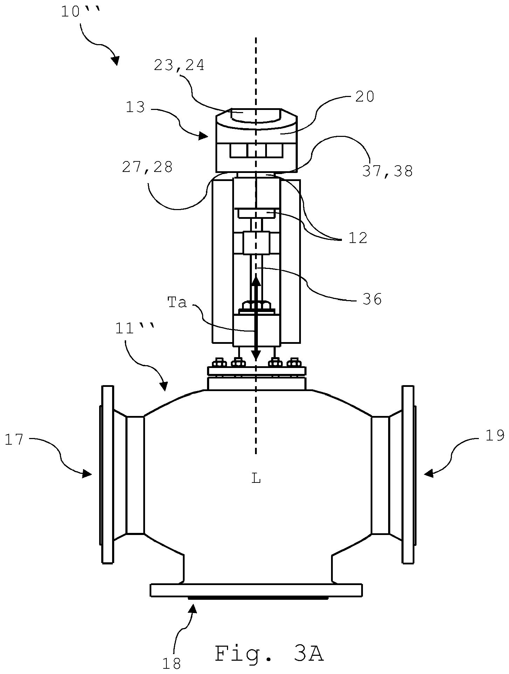

In den in Figuren 3A bis 3C gezeigten Beispielen ist die Armatur 10" ebenfalls als ein Ventil 10" ausgestaltet, wobei das in den Figuren 3A bis 3C gezeigte 3-Wege-Ventil 10" größer bemessen ist als das in Figur 1 gezeigte Ventil 10.

Das in Figur 3A gezeigte modulare Armaturenantriebssystem 10" weist ein Antriebsmodul 13 mit einem Antriebsmodulgehäuse 20 sowie ein Lineargetriebemodul 12 mit einem Lineargetriebemodulgehäuse 39 auf. An einer Unterseite 27 des Antriebsmodulgehäuses 20 ist eine Modulschnittstelle 28 des Antriebsmoduls 13 angeordnet, an der das Antriebsmodul 13 mit einer an der Oberseite 37 des Lineargetriebemoduls 12 angeordneten Modulschnittstelle 38 des Lineargetriebemoduls 12 verbunden ist.

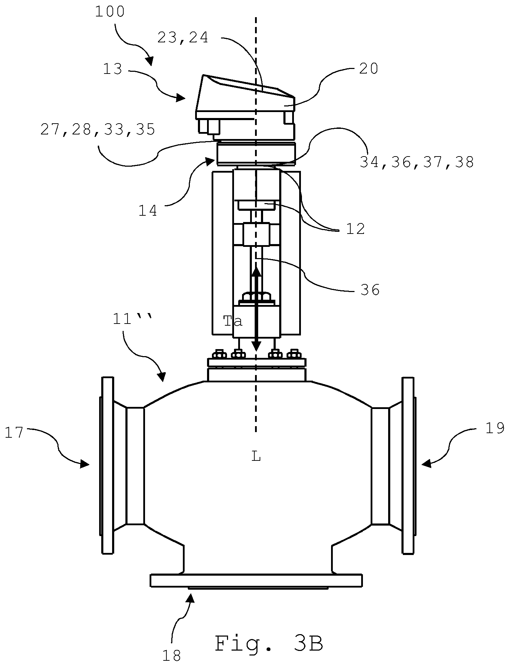

In Figur 3B ist ein weiteres Beispiel des in Figur 3A gezeigten Armaturenantriebssystems 10" abgebildet. In diesem Beispiel ist ein Federmodul 14 mit einem Federmodulgehäuse 32 zwischen dem Antriebsmodul 13 und dem Lineargetriebemodul 12 montiert. An einer Oberseite 33 des Federmodulgehäuses 32 ist eine Modulschnittstelle 35 ausgebildet, mit der das Federmodulgehäuse 32 mit der Unterseite 27 des Antriebsmodulgehäuses 20 verbunden ist. Auf der Unterseite 34 des Federmodulgehäuses 32 ist eine Modulschnittstelle 36 entsprechend vorgesehen, welche mit der Modulschnittstelle 38 an der Oberseite 37 des Lineargetriebemodulgehäuses 39 verbunden ist.

Die Armaturenantriebsmodule 12, 13, 14 sind mit Gewindeschrauben, deren Schäfte von unten durch Durchgangsbohrungen geschoben und an der Unterseite des darüber liegenden Armaturenantriebsmoduls 12, 13 bzw. 14 in dafür vorgesehene Gewindebohrungen in Eingriff gebracht werden, an den darüber liegenden Armaturenantriebsmodulen 12, 13 bzw. 14 befestigt. Hierbei ist das Antriebsmodulgehäuse 20 im Vergleich zum Beispiel aus Figur 3A um 90° um eine Längsachse L gedreht, damit die durch die Durchgangsbohrungen geschobenen Schäfte an der Unterseite des darüber liegenden Armaturenantriebsmoduls auf eine Gewindebohrung treffen.

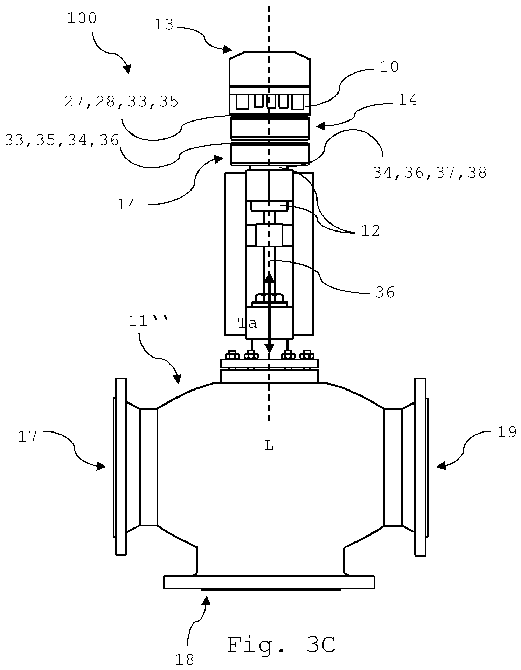

In Figur 3C ist ein weiteres Beispiel für das modulare Armaturenantriebssystem 10" abgebildet, bei welchem zwischen dem Federmodul 14 und dem Lineargetriebemodul 12 ein weiteres Federmodul 14 montiert ist. Bei dem in Figur 3C gezeigten Beispiel ist das Antriebsmodulgehäuse 20 im Vergleich zu dem in Figur 3B gezeigten Beispiel um weitere 90° um die Längsachse L gedreht. In den Federmodulen 14 sind jeweils Federelemente angeordnet, deren Federdrehmomente FT parallel wirken. Die Federelemente sind beispielsweise als Rollfedern ausgestaltet.

In Figur 4 ist veranschaulicht, wie ein Armaturenantriebssystem 10 aus mehreren Armaturenantriebsmodulen 12, 13, 14 zusammengestellt und montiert wird. In Figur 4 sind beispielhaft ein Antriebsmodul 13, drei Federmodule 14 sowie ein Lineargetriebemodul 12 zu einem Armaturenantriebssystem 10 zusammengesetzt. Auf der linken Seite von Figur 4 ist ein schematischer Querschnitt durch die Armaturenantriebsmodule 12, 13, 14 gezeigt, wobei auf der rechten Seite der Figur 4 die dazugehörigen Draufsichten der Ober- und Unterseiten der Armaturenantriebsmodule 13 und 14 abgebildet sind.

Das Antriebsmodul 13 weist ein Antriebsmodulgehäuse 20 auf, in welchem ein elektrischer Antriebsmotor 21 mit einem modulinternen Drehgetriebe 25 und einer modulinternen Steuerung 22 untergebracht sind, wobei die Steuerung 22 kommunikativ mit der Bedieneinheit 24 verbunden ist. Die Steuerung 22 ist mit dem elektrischen Antriebsmotor 21 verbunden und dazu ausgestaltet, den elektrischen Antriebsmotor 21 derart anzusteuern, dass beispielsweise die Armatur 11, 11' bzw. 11" geöffnet, geschlossen und/oder eine gewünschte Stellposition des Stellglieds der Armatur 11, 11` bzw. 11" eingestellt wird.

An der Unterseite 27 des Antriebsmodulgehäuses 20 ist eine Modulschnittstelle 28 vorgesehen. Die Modulschnittstelle 28 des Antriebsmoduls 12 weist eine Vielzahl von Gewindebohrungen 44 auf.

Die Federmodulgehäuse 32 sind zumindest im Wesentlichen gleich aufgebaut.

An der Oberseiten 33 der Federmodulgehäuse 32 sind Modulschnittstellen 35 mit einer Vielzahl von Durchgangsbohrungen 43 und einer Vielzahl von Gewindebohrungen 44 angeordnet. Die Durchgangsbohrungen 43 erstrecken sich von der Oberseite 33 bis hin zur Unterseite 34 der Federmodulgehäuse 32 parallel zur Längsachse L.

Die Durchgangsbohrungen 43 und Gewindebohrungen 44 sind in einem Muster angeordnet. Bei dem Muster M1 in Figur 4 handelt es sich um einen Kreis, der um eine Längsachse L herum angeordnet ist. Die Durchgangsbohrungen 43 und Gewindebohrungen sind auf dem Kreis des Musters M1 angeordnet. Bei dem in Figur 4 gezeigten Beispiel sind beispielhaft vier Durchgangsbohrungen 43 und vier Gewindebohrungen 44 auf dem äußeren Kreis angeordnet. Im einfachsten Fall können jedoch auch schon zwei Durchgangsbohrungen 43 und zwei Gewindebohrungen 44 verwendet werden, um die Armaturenantriebsmodule 12, 13, 14 miteinander drehfest zu verbinden, so dass eine Drehmomentübertragung zwischen den Armaturenantriebsmodulen stattfinden kann.

Die einzelnen Modulschnittstellen 28, 35, 36 und 38 an den Ober- und Unterseiten der Modulgehäuse sind so angeordnet, dass sie fluchtend übereinander angeordnet sind, wenn die einzelnen Gehäuse übereinander gestapelt werden. Die Armaturenantriebsmodule 12, 13, 14 können so je nach Anforderung zu einem Ventilantriebssystem zusammengesetzt und montiert werden. An der Unterseite 27 des Antriebsmodulgehäuses 20 sind vier Gewindebohrungen 44 angeordnet. So können vier Gewindeschrauben 45 (von unten) durch die Durchgangsbohrungen 43 des oberen Federmoduls 14 gesteckt werden, so dass der Schaft 46 der Gewindeschrauben 45 an der Oberseite 33 des Federmodulgehäuses 32 vorsteht und mit den Gewindebohrungen 44 in der Unterseite 27 des Antriebmodulgehäuses 20 in Eingriff gebracht werden kann. Das oberste Federmodul 14 kann so gegen das Antriebsmodulgehäuse 20 gespannt und an diesem befestigt werden. Nach dem gleichen Prinzip lassen sich nun die zwei weiteren Federmodulgehäuse 32 der weiteren Federmodule 14 (von unten) mit Gewindeschrauben 45 an den Unterseiten 34 der darüber gelegenen Gehäuse befestigen.

Das Antriebsmodul 13 weist eine Wellenkupplung 26 auf, mit der die Ausgangswelle des modulinternen Drehgetriebes 25 mit der Eingangswelle eines darunter liegenden Armaturenantriebmoduls 13, 14, 15, 16 des Antriebsbaukastens bewegungsgekoppelt verbindbar ist. Für die Bewegungskopplung sind zwischen den einzelnen Ventilantriebsmodulen jeweils Kuppelelemente 47 vorgesehen.

In Figur 2 weist die Wellenkupplung 26 des Antriebsmoduls 12 eine Koppeltasche 48 auf, in die ein oder mehrere Kuppelelemente 47 eingeführt werden können.

Das unterhalb des Antriebmoduls 12 angeordnete Federmodul 14 weist eine Verbindungswelle 49 auf, welche an der Oberseite 33 des Federmodulgehäuses 32 eine Koppeltasche 48 aufweist, in die ein oder mehrere Kuppelelemente 47 eingeführt werden können. In dem Federmodulgehäuse 32 ist ein Federelement 50 angeordnet. Das Federelement 50 ist eine Rollfeder, deren Federdrehmoment in einer vorbestimmten Drehrichtung (linksdrehend) auf die Verbindungswelle 49 wirkt. An der Unterseite 34 des Federmodulgehäuses 32 weist die Verbindungswelle 49 ebenfalls eine Koppeltasche auf, in welches ein oder mehrere Kuppelelemente 47 eingeführt werden können, welche die Verbindungswelle 49 des Federmoduls 14 mit einer Eingangswelle eines darauffolgenden Moduls bewegungskoppeln.

In dem in Figur 4 gezeigten Beispiel wirkt das Federdrehmoment FT der Federmodule 14 linksdrehend (entgegen dem Uhrzeigersinn), wie dies durch den Pfeil in Figur 4 dargestellt wird. In Figur 4 ist außerdem ein weiteres Federmodul 14 abgebildet, das in der zuvor beschriebenen Art und Weise mit den anderen Modulen gestapelt ist. Die einzelnen Verbindungswellen 49 der Federmodule 14 sind über die als Wellenkupplungen wirkenden Kuppelelemente 47 miteinander bewegungsgekoppelt, so dass die Federdrehmomente FT der Federmodule 14 parallel zueinander wirken.

Bei den Kuppelelementen 47 handelt es sich in Figur 4 um Stifte. Die Koppeltaschen in den Ein- bzw. Ausgangswellen der einzelnen Module sind entsprechend an die Kuppelelemente angepasst. Anstelle der stiftförmigen Kuppelelemente 47 können jedoch auch anders geformte Kuppelelemente 47 verwendet werden, die dazu geeignet sind, das Drehmoment einer Welle auf eine andere Welle zu übertragen. Beispielsweise können hierfür Elemente mit rechteckigen, sechseckigen, fünfeckigen, sieben- oder achteckigen oder sternförmigen Querschnitten verwendet werden.

Da die Ober- und Unterseiten 33 und 34 der Federmodulgehäuse 32 identisch aufgebaut sind, können die Federmodule 14 auch gewendet werden, so dass die Federdrehmomente FT der Federelemente 47 beispielsweise im Uhrzeigersinn (rechtsdrehend) wirken. Hierdurch kann die Sicherungsstellung, in welche die Stellglieder der Armatur 11, 11' bzw. 11" durch die Federmodule 14 gebracht werden, an die Armatur 11, 11' bzw. 11" sowie in Abhängigkeit davon, an welcher Stelle der Anlage die Armatur 11, 11` bzw. 11" verbaut ist, angepasst und verändert werden. Bei manchen Armaturen 11, 11` bzw. 11" kann die Sicherungsstellung ein vollständig geschlossenes Stellglied bedeuten, während bei anderen Armaturen 11, 11` bzw. 11" die Sicherungsstellung beispielsweise ein vollständig geöffnetes Stellglied bedeuten kann.

Das letzte Federmodul 14 ist in Figur 4 an seiner Unterseite 34 mit dem Lineargetriebemodulgehäuse 39 verbunden.

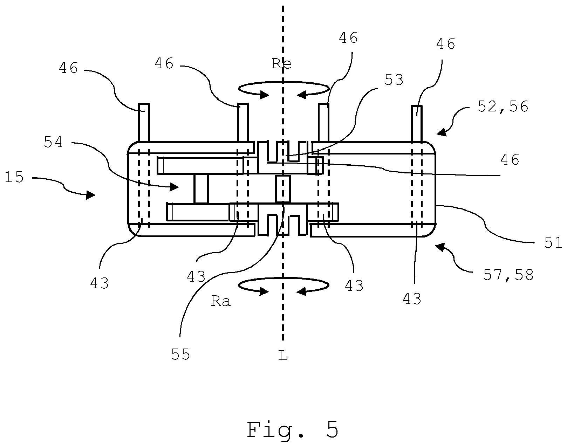

Figur 5 zeigt ein Drehgetriebemodul 15, das an der Oberseite 52 des Drehgetriebemodulgehäuses 51 eine Eingangswelle 53 aufweist, die mit einer Koppeltasche versehen ist, in welcher ein Kuppelelement 47 eingeführt werden kann. Das Kuppelelement 47 überträgt eine Drehbewegung auf das Drehgetriebemodul 15. In dem Drehgetriebemodul 15 ist ein Drehgetriebe 54 untergebracht, welches eine eingangsseitige Drehbewegung Re in eine ausgangsseitige Drehbewegung Ra umsetzt. Die ausgangsseitige Drehbewegung Ra liegt an der ausgangsseitigen Drehgetriebemodulwelle 55 des Getriebemoduls 40 an. Die ausgangsseitige Drehgetriebemodulwelle 55 des Drehgetriebemoduls 15 weist eine Kuppeltasche auf, in die wiederum ein Kuppelelement 47 eingeführt werden kann. Das Kuppelelement 47 überträgt die ausgangsseitige Drehbewegung Ra auf ein darauf folgendes Modul.

Der erfindungsgemäße Antriebsbaukasten aus Armaturenantriebsmodulen 12, 13, 14, 15, 16 dient dem Zusammensetzen und Zusammenbauen eines modularen Armaturenantriebssystems 10, 10', 10". Die Armaturenantriebsmodule 12, 13, 14, 15, 16 des erfindungsgemäßen Antriebsbaukastens sind über ihre Modulschnittstellen 28, 35, 36, 38 miteinander zu einem Armaturenantriebssystem 10, 10', 10" variabel verbindbar. In den Modulgehäusen 11, 21, 31, 41 der Ventilantriebsmodule 10, 20, 30, 40 sind die jeweiligen funktionalen Einheiten getrennt voneinander enthalten, wodurch die Montage erleichtert werden kann. Der erfindungsgemäße Antriebsbaukasten umfasst ein elektrisches Antriebsmodul 13 mit einem Antriebsmodulgehäuse 20, an dessen Unterseite 27 eine Modulschnittstelle 28 angeordnet ist; sowie ein an einer Armatur anbringbares Stellmodul, das dazu eingerichtet ist, eine eingangsseitige Drehbewegung in eine ausgangsseitige Bewegung umzusetzen, mit der die Armatur betätigbar ist, wobei die Armaturenantriebsmodule 12, 13, 14, 15, 16 über ihre Modulschnittstellen 28, 35, 36, 38 miteinander zu einem Armaturenantriebsystem verbindbar sind.

### Bezugszeichen:

- 10, 10', 10": Armaturenantriebssystem
- 11, 11', 11": unterschiedliche Armaturen (kleines Ventil, großes Ventil, Klappe)
- 12: Lineargetriebemodul
- 13: Antriebsmodul
- 14: Federmodul
- 15: Drehgetriebemodul
- 16: Schwenkmodul
- 17: A-Einlass
- 18: B-Einlass
- 19: AB-Auslass
- 20: Antriebsmodulgehäuse
- 21: Antriebsmotor
- 22: Steuerung (modulintern)
- 23: Oberseite des Antriebsmoduls
- 24: Bedieneinheit
- 25: Drehgetriebe des Antriebsmoduls (modulintern)
- 26: Wellenkupplung des Antriebsmoduls
- 27: Unterseite des Antriebsmodulgehäuses
- 28: Modulschnittstelle des Antriebsmoduls
- 29: Ständermodul
- 30: Kupplung des Lineargetriebemoduls
- 31: Ventilspindel
- 32: Federmodulgehäuse
- 33: Oberseite des Federmodulgehäuses
- 34: Unterseite des Federmodulgehäuses
- 35: Modulschnittstelle an der Oberseite des Federmodulgehäuses
- 36: Modulschnittstelle an der Unterseite des Federmodulgehäuses
- 37: Oberseite des Lineargetriebemodulgehäuses
- 38: Modulschnittstelle des Lineargetriebemoduls
- 39: Schwenkmodulgehäuse
- 40: Oberseite des Schwenkmodulgehäuses
- 41: Modulschnittstelle des Schwenkmoduls
- 42: Kopf der Gewindeschrauben
- 43: Durchgangsbohrungen
- 44: Gewindebohrungen
- 45: Gewindeschrauben
- 46: Schaft der Gewindeschrauben
- 47: Kuppelelemente
- 48: Kuppeltasche
- 49: Verbindungswelle
- 50: Federelement
- 51: Drehgetriebemodulgehäuse
- 52: Oberseite des Drehgetriebemodulgehäuse
- 53: Eingangswelle des Drehgetriebemoduls
- 54: Drehgetriebe (modulintern)
- 55: Drehgetriebemodulwelle
- 57: Unterseite des Drehgetriebemoduls
- 58: Modulschnittstelle des Drehgetriebemoduls
- 59: Handhebel
- 60: Oberseite des Schwenkmodulgehäuses
- 62: Schwenkmodulgehäuse
- 63: Unterseite des Schwenkmodulgehäuses
- FT: Federdrehmoment eines Federmoduls
- L: Längsachse
- Re: eingangsseitige Drehbewegung
- Ra: ausgangsseitige Drehbewegung
- Ta: ausgangsseitige Hubbewegung

## Patentansprüche

1. Antriebsbaukasten aus Armaturenantriebsmodulen (12, 13, 14, 15, 16) zum Aufbauen eines Armaturenantriebssystems (100), umfassend:
- ein elektrisches Antriebsmodul (13) mit einem Antriebsmodulgehäuse (20), an dessen Unterseite (27) eine Modulschnittstelle (28) angeordnet ist;
- ein an einer Armatur (11, 11', 11") anbringbares Stellmodul (12, 16), das dazu eingerichtet ist, eine eingangsseitige Drehbewegung (Re) in eine ausgangsseitige Bewegung umzusetzen, mit der die Armatur (11, 11', 11") betätigbar ist,
wobei die Armaturenantriebsmodule (12, 13, 14, 15, 16) über ihre Modulschnittstellen (13, 24, 25, 33) miteinander zu einem Armaturenantriebsystem (10, 10', 10") verbindbar sind.

2. Antriebsbaukasten nach Anspruch 1, **dadurch gekennzeichnet, dass** die Armaturenantriebsmodule (12, 13, 14, 15, 16) mindestens ein Federmodul (14) mit einem Federmodulgehäuse (32) aufweisen, an dessen Oberseite (33) und Unterseite (34) Modulschnittstellen (35, 36) angeordnet sind.

3. Antriebsbaukasten nach Anspruch 1 oder 2, **dadurch gekennzeichnet, dass** die Armaturenantriebsmodule (12, 13, 14, 15, 16) jeweils Wellenkupplungen (15, 28, 29, 35) aufweisen, mit denen die Wellen der einzelnen Armaturenantriebsmodule (12, 13, 14, 15, 16) miteinander koppelbar sind.

4. Antriebsbaukasten nach Anspruch 2 oder 3, **dadurch gekennzeichnet, dass** die Modulschnittstellen (24, 25) des Federmoduls (14) wahlweise mit den Modulschnittstellen anderer Federmodule (14) oder den Modulschnittstellen (13, 33) der weiteren Armaturenantriebsmodule (12, 13, 14, 15, 16) verbindbar sind.

5. Antriebsbaukasten nach einem der Ansprüche 2 bis 4, **dadurch gekennzeichnet, dass** das Federmodulgehäuse (32) des Federmoduls (14) ein in dem Federmodul (14) untergebrachtes Federelement (26) einschließt.

6. Antriebsbaukasten nach einem der Ansprüche 2 bis 5, **dadurch gekennzeichnet, dass** das mindestens eine Federmodul (14) eine Verbindungswelle (27) aufweist.

7. Antriebsbaukasten nach Anspruch 5 oder 6, **dadurch gekennzeichnet, dass** das Federelement (26) dazu eingerichtet ist, ein Federdrehmoment (FT) auf die Verbindungswelle (27) derart wirken zu lassen, dass dieses in eine Federrichtung vorgespannt ist.

8. Antriebsbaukasten Anspruch 7, **dadurch gekennzeichnet, dass** das Antriebsbaukasten mehrere Federmodule (14) mit einheitlich festgelegten Federdrehmomenten (FT) aufweist, die derart stapelbar sind, dass die Federdrehmomente (FT) zueinander parallel auf die Eingangswelle (34) des Stellmoduls (12, 16) wirken.

9. Antriebsbaukasten nach einem der Ansprüche 2 bis 8, **dadurch gekennzeichnet, dass** die an den Unterseiten (34) der Federmodule (14) angeordneten Modulschnittstellen (36) mit den an den Unterseiten (34) angeordneten Modulschnittstellen der übrigen Armaturenantriebsmodule (12, 13, 14, 15, 16) des Antriebsbaukastens und entsprechend die an den Oberseiten der Federmodule (14) angeordneten Modulschnittstellen mit den an den Oberseiten angeordneten Modulschnittstellen der übrigen Armaturenantriebsmodule (12, 13, 14, 15, 16) des Antriebsbaukastens derart verbindbar sind, dass die Federmodule (14) auf dem Kopf stehend eingebaut sind.

10. Antriebsbaukasten nach einem der vorhergehenden Ansprüche, **dadurch gekennzeichnet, dass** die Modulschnittstellen (13, 24, 25) der Armaturenantriebsmodule (12, 13, 14, 15, 16) Durchgangsbohrungen (43) aufweisen, die sich von der Oberseite (33) bis zur Unterseite (34) der Modulgehäuse (20) erstrecken.

11. Antriebsbaukasten nach einem der vorhergehenden Ansprüche, **dadurch gekennzeichnet, dass** die Modulschnittstellen (13, 24, 25) der Armaturenantriebsmodule (12, 13, 14, 15, 16) Gewindebohrungen (44) aufweisen, die an der Ober- und Unterseite der Modulgehäuse angeordnet sind.

12. Antriebsbaukasten nach einem der vorhergehenden Ansprüche, **dadurch gekennzeichnet, dass** der Antriebsbaukasten ferner ein Drehgetriebemodul (15) mit einem Drehgetriebemodulgehäuse (41) umfasst, an dessen Oberseite (42) und Unterseite (43) Modulschnittstellen (44, 45) angeordnet sind, wobei das Drehgetriebemodul (15) dazu eingerichtet ist, eine eingangsseitige Drehbewegung (Re) in eine ausgangsseitige Drehbewegung (Ra) umzusetzen, wobei vorzugsweise die ausgangsseitige Drehbewegung (Ra) zu der eingangsseitigen Drehbewegung (Re) unter- oder übersetzt ist.

13. Antriebsbaukasten nach einem der vorhergehenden Ansprüche, **dadurch gekennzeichnet, dass** die Stellmodule (12, 15, 16) des Antriebsbaukastens ein Lineargetriebemodul (12) mit einem Lineargetriebemodulgehäuse (39) aufweisen, an dessen Oberseite (37) eine Modulschnittstelle (38) angeordnet ist, wobei das Lineargetriebemodul (12) dazu eingerichtet ist, eine eingangsseitige Drehbewegung (Re) in eine ausgangsseitige Hubbewegung (Ta) umzusetzen, mit der die Armatur (11, 11', 11") betätigt wird.

14. Antriebsbaukasten nach einem der vorhergehenden Ansprüche, **dadurch gekennzeichnet, dass** die Stellmodule (12, 15, 16) des Antriebsbaukastens ein Schwenkmodul (16) mit einem Schwenkmodulgehäuse (39), an dessen Oberseite (40) eine Modulschnittstelle (41) angeordnet ist, wobei das Schwenkmodulmodul (16) dazu eingerichtet ist, eine eingangsseitige Drehbewegung (Re) in eine ausgangsseitige Schwenkbewegung zum Betätigen der Armatur umzusetzen.

15. Antriebsbaukasten nach einem der vorhergehenden Ansprüche, **dadurch gekennzeichnet, dass** die Abmessungen und Anordnungen der an den Ober- und Unterseiten der Gehäuse (11, 21, 31, 41) der Armaturenantriebsmodule (12, 13, 14, 15, 16) vorgesehenen Modulschnittstellen (28, 35, 36, 38) derart einander angepasst sind, dass diese wahlweise miteinander verbindbar sind.

16. Armaturenantriebssystem, das aus mehreren Armaturenantriebsmodulen (12, 13, 14, 15, 16) des Antriebsbaukastens nach einem der vorhergehenden Ansprüche zusammengebaut ist.
